# EUROPÄISCHE PATENTSCHRIFT

(11) **EP 0 362 537 B1**
(45) Veröffentlichungstag und Bekanntmachung des Hinweises auf die Patenterteilung: **03.11.1993**
(21) Anmeldenummer: 89115523.6
(22) Anmeldetag: 23.08.1989
(51) Int. Cl.: H04N 9/29

(54) **Verfahren zur Kompensation des Erdmagnetfeldes in einer Bildröhre**
Method for compensating the earth-magnetic field in a picture tube
Méthode de compensation du champ magnétique terrestre dans un tube image

(30) Priorität: 12.09.1988 DE 3830931
(43) Veröffentlichungstag der Anmeldung: 11.04.1990
(73) Patentinhaber: Deutsche Thomson-Brandt GmbH, 78003 Villingen-Schwenningen (DE)
(72) Erfinder: Hartmann, Uwe, D-8391 Untergriesbach (DE); Mai, Udo, D-8391 Untergriesbach (DE)

(56) Entgegenhaltungen:
- US-A- 4 262 232
- PATENT ABSTRACTS OF JAPAN, Band 11, Nr. 92 (E-491)[2539], 24. März 1987; & JP-A-61 242 491 (MATSUSHITA ELECTRIC IND. CO. LTD) 28-10-1986
- U. Tietze, C. Schenk: Halbleiterschaltungstechnik. Springer-Verlag 1983; Abschnitt 17.2

## Beschreibung

Die Erfindung betrifft ein Verfahren zur Kompensation des Erdmagnetfeldes in einer Bildröhre
Bei Bildröhren mit großem Format des Bildschirmes ist eine Abschirmung notwendig, um das Erdmagnetfeld von dem Ablenkmagnetfeld innerhalb der Bildröhre fernzuhalten. Diese Abschirmung ist wegen ihrer erforderlichen Größe sehr kostspielig und wird schon deshalb nicht verwendet. Billiger sind Schaltungsanordnungen, die dieses Erdmagnetfeld auf elektrischem Wege kompensieren. Wird der Einfluß des Erdmagnetfeldes nicht beseitigt, können erhebliche Qualitätseinbußen in Form von Farbreinheitsfehlern auftreten.
Es ist bekannt, das Erdmagnetfeld mit Hilfe einer an der Bildröhre angebrachten Spule zu kompensieren. Die bekannten Bildwiedergabegeräte besitzen zu diesem Zweck an ihrer Rückseite einen oder auch mehrere Schalter zur Einstellung von Strömen unterschiedlicher Größe und Richtung durch diese Kompensationsspule, welche zwischen eine Betriebsspannung und Erdpotential geschaltet ist. In Serie zur Kompensationsspule liegt ein Strombegrenzungswiderstand. Ein Teil dieses Widerstandes ist mit Hilfe eines ersten Schalters überbrückbar, wodurch wodurch zwei unterschiedlich große Stromstärken durch die Kompensationsspule eingestellt werden können. Ein zweiter z.B. dreistufiger Schalter mit zwei Kontaktebenen dient dazu, die beiden Enden der Kompensationsspule wechselweise an den Vorwiderstand und an Erdpotential zu schalten, um die Stromrichtung durch die Kompensationsspule umzukehren oder auch ganz abzuschalten.

Eine derartige Anordnung besitzt jedoch zwei große Nachteile. Erstens kann der Kompensationsstrom nur zwischen zwei festen Werten umgeschaltet werden und zweitens ist die Bedienung durch eine rückwärtige Anordnung der Schalter umständlich und oft nicht möglich, wenn das Bildwiedergabegerät in einer Schrankwand eingebaut ist.

Der Erfindung liegt die Aufgabe zugrunde, diese Nachteile zu beseitigen. Diese Aufgabe wird durch die im Patentanspruch angegebene Maßnahme gelöst.
Die Erfindung besitzt den großen Vorteil, daß die Einstellung des Stromes durch die Kompensationsspule kontinuierlich und ohne umständliche Handhabung infolge einer rückwärtigen Bedienung des Gerätes vorgenommen werden kann.

Nachstehend wird die Erfindung an einem Ausführungsbeispiel mit Hilfe der Zeichnung erläutert.
- Figur 1: zeigt einen prinzipiellen Aufbau zur Erklärung der Wirkungsweise der Erfindung
- Figur 2: zeigt ein detailliertes Ausführungsbeispiel der Erfindung

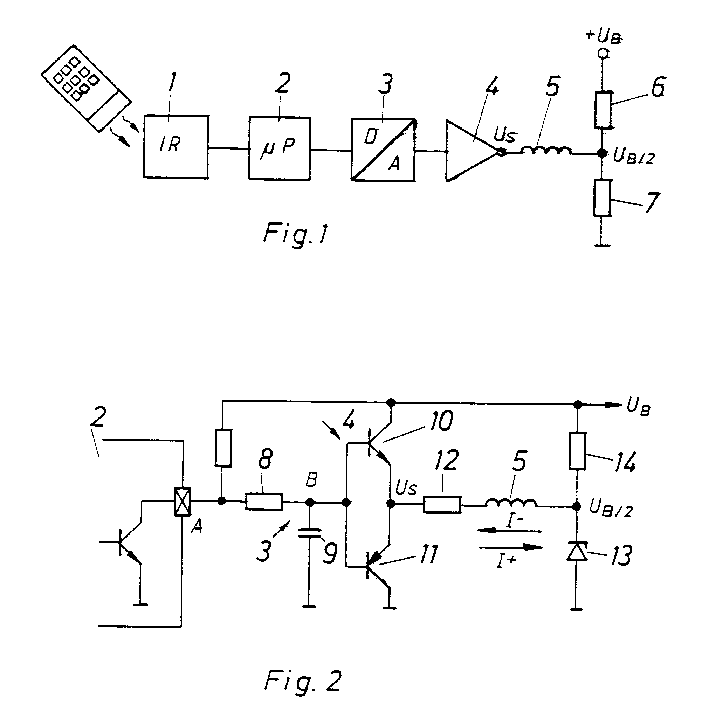

In Figur 1 ist mit 1 eine Empfangsstufe bezeichnet, welche Fernsteuersignale, z.B. digital kodierte Infrarotlichtsignale verstärkt und diese an einen Mikroprozessor 2 weiterleitet.

Dieser wandelt das empfangene Signal in ein in seinem Tastverhältnis veränderbares Rechtecksignal um, welches dann an einen Digital-Analog-Wandler 3 gelangt. Das umgewandelte Analogsignal entspricht einem zwischen Null Volt und einer Betriebsspannung U_{B} sich ändernden Pegel. Über einen Leistungsverstärker 4 gelangt dieser Pegel an das eine Ende der Kompensationsspule 5, deren anderes Ende auf ein Potential U_{B}/2 geschaltet ist, das der Hälfte der Betriebsspannung U_{B} entspricht. Dieses Potential wird durch den Spannungsteiler 6,7 erzeugt, der zwischen die Betriebsspannung U_{B} und Erdpotential geschaltet ist.
Die Wirkungsweise der Schaltung ist derart, daß bei einem Pegel am Ausgang des Leistungsverstärkers 4 in der Größe von U_{B}/2 kein Strom durch die Kompensationsspule 5 fließt, ist die Spannung am Ausgang des Leistungsverstärkers 4 größer, so fließt je nach Potentialdifferenz ein Strom I+, ist die Spannung am Ausgang kleiner, so fließt je nach Potentialdifferenz ein Strom I- durch die Kompensationsspule 5.

In Figur 2 ist dargestellt, wie die Schaltung nach Figur 1 in der Praxis aufgebaut werden kann.
Die aus dem Mikroprozessor 2 am Ausgang A kommenden Impulse gelangen an das aus dem Widerstand 8 und dem Kondensator 9 bestehende R-C-Glied, das den oben erwähnten Digital-Analog-Wandler 3 bildet. Der am Punkt B entstehende Pegel wird über den aus den Transistoren 10 und 11 bestehenden Leistungsverstärker 4 niederohmig als Einstellspannung U_{S} abgenommen. über einen Strombegrenzungswiderstand 12 gelangt die Spannung U_{S} an die Kompensationsspule 5, deren anderes Ende auf einem festen Gleichspannungspegel U_{B}/2 mit Hilfe einer Z-Diode 13 liegt, welche über den Widerstand 14 mit der Gleichspannung U_{B} verbunden ist.

## Patentansprüche

1. Verfahren zur Kompensation des Erdmagnetfeldes in einer Bildröhre eines fernsteuerbaren Fernsehempfängers mit Hilfe einer Kompensationsspule, **dadurch gekennzeichnet**, daß ein Fernsteuerkanal des Fernsehempfängers für die Erzeugung einer Gleichspannung (US) im Fernsehempfänger vorgesehen ist, die an die Kompensationsspule (5) gelegt ist, deren anderes Ende an eine stabile Spannung (UB/2) gelegt ist, wobei die Spannung (US) zwischen dem Wert 0 und UB veränderbar ist.

## Claims

1. A method for the compensation of the earth's magnetic field in a picture tube of a remotely-controllable television receiver with the aid of a compensation coil, characterised in that a remote control channel at the television receiver is provided for the production in the television receiver of a d.c. voltage (US) which is applied to the compensation coil (5), the other end of which is at a steady voltage (UB/2), in which the voltage (US) is variable between the value 0 and UB.

## Revendications

1. Méthode de compensation du champ magnétique terrestre dans un tube image d'un récepteur de télévision qui peut être télécommandé à l'aide d'une bobine de compensation, **caractérisée en ce** qu'un canal de télécommande du récepteur de télévision est prévu pour la génération d'une tension continue (US) dans le récepteur de télévision qui est appliquée à la bobine de compensation (5) dont l'autre extrémité est appliquée à une tension stable (UB/2), la tension (US) pouvant varier entre la valeur 0 et UB.
